# EUROPÄISCHE PATENTANMELDUNG

(11) **EP 3 795 864 A1**
(43) Veröffentlichungstag der Anmeldung: **24.03.2021**
(21) Anmeldenummer: 19198498.8
(22) Anmeldetag: 20.09.2019
(51) Int. Cl.: F16H 57/08

(54) **GERÄUSCHOPTIMIERTER PLANETENRADTRÄGER, PLANETENRADTRÄGERANORDNUNG, PLANETENGETRIEBE, WINDKRAFTANLAGE UND INDUSTRIE-APPLIKATION**

(71) Anmelder: Flender GmbH, 46395 Bocholt (DE)
(72) Erfinder: Christ, Michael, 48249 Dülmen (DE)
(74) Vertreter: Maier, Daniel Oliver

(57) **Zusammenfassung**

Die Erfindung betrifft einen Planetenradträger (10), der eine erste Planetenradträger-Komponente (11) mit einer Wange (14) und einem Planetenradbolzen (20) umfasst, wobei die Planetenradbolzen (20) mit der Wange (14) einstückig ausgebildet sind. Erfindungsgemäß weist zumindest einer der Planetenradbolzen (20) zu einer Reduzierung eines Betriebsgeräuschs entlang einer Bolzenachse (25) einen diskret veränderlichen Querschnitt (22, 24) auf. Die Erfindung betrifft auch eine Planetenradträgeranordnung (40) mit einem entsprechenden Planetenradträger (10) und ein Planetengetriebe (60), das mit einer solchen Planetenradträgeranordnung (40) versehen ist. Ebenso betrifft die Erfindung eine Windkraftanlage (70) und eine Industrie-Applikation (80) mit einem derartigen Planetengetriebe (60).

## Beschreibung

Die Erfindung betrifft einen Planetenradträger, der im Hinblick auf ein Betriebsgeräusch verbessert ist. Die Erfindung auch eine Planetenradträgeranordnung, die einen entsprechenden Planetenradträger aufweist. Darüber hinaus betrifft die Erfindung ein Planetengetriebe, das über eine solche Planetenradträgeranordnung verfügt. Ebenso betrifft die Erfindung eine Windkraftanlage und die Industrie-Applikation, die über ein derartiges Planetengetriebe verfügen.

Aus der Druckschrift US 2019/0136945 A1 ist ein Planetenradträger bekannt, der über einen angeformten Planetenradbolzen verfügt. Der Planetenradträger ist durch Additive Manufacturing herstellbar und weist im Inneren Ausnehmungen auf, die zu einem Leiten von Schmierstoff geeignet sind. Der Planetenradbolzen weist entlang einer Bolzenachse einen kontinuierlich veränderlichen Querschnitt auf.

Das Dokument EP 3 284 975 A1 offenbart einen Planetenradträger mit montierbaren Planetenachsen. Die Planetenachsen sind analog zu einer Querlenkerachse und/oder einer Schub-/Biegelenkerachse und/oder einer Längslenkerachse wie im Automobilbau ausgebildet.

Aus EP 2 394 075 B1 ist ein Planetenradträger bekannt, an den Planetenradachsen montierbar sind. Die Planetenradachsen weisen entlang ihrer Drehachse betrachtet einen kontinuierlich veränderlichen Querschnitt auf. Die Planetenradachse weist einen in einem mittleren Bereich verjüngten Abschnitt auf, durch den eine lokal reduzierte Steifigkeit vorliegt. Planetengetriebe werden in einer Vielzahl an Anwendungsgebieten eingesetzt, in denen steigende Anforderungen in puncto Leistungsdichte, Beanspruchbarkeit, Lebensdauer und Wirtschaftlichkeit gestellt werden. Ebenso wird für den Betrieb eines Planetengetriebes eine reduzierte Geräuschentwicklung verlangt. Der Erfindung liegt die Aufgabenstellung zugrunde, eine Möglichkeit bereitzustellen, die in zumindest einem der beschriebenen Punkte eine Verbesserung bietet.

Die Aufgabenstellung wird durch einen erfindungsgemäßen Planetenradträger gelöst. Der Planetenradträger ist zu einer Drehung um eine Hauptdrehachse ausgebildet und umfasst eine erste Planetenradträger-Komponente. Der Planetenradträger umfasst auch eine zweite Planetenradträger-Komponente, die als Aufsteckwange ausgebildet ist und im montierten Zustand mit der ersten Planetenradträger-Komponente verbunden ist, beispielsweise durch Verpressen, Verschweißen oder Verschrauben. Die erste Planetenradträger-Komponente umfasst eine Wange, die in einen Planetenradbolzen übergeht. Die Wange und der Planetenradbolzen sind dabei einstückig ausgebildet, so dass die erste Planetenradträger-Komponente im Wesentlichen ein Integralbauteil ist. Die Planetenradbolzen sind jeweils dazu ausgebildet, dass diese mit einem Lager ausstattbar sind, insbesondere einem Wälzlager oder Gleitlager, um so ein Planetenrad drehbar zu aufzunehmen. Die Planetenradbolzen erstrecken sich jeweils entlang einer Bolzenachse, die im Wesentlichen senkrecht von der Wange absteht. Erfindungsgemäß weist der Planetenradbolzen, entlang der Bolzenachse betrachtet, einen diskret veränderlichen Querschnitt auf. Unter einem diskret veränderlichen Querschnitt ist hierbei ein Querschnitt mit stufenartigen Querschnittsänderungen zu verstehen. Durch den diskret veränderlichen Querschnitt ergeben sich entlang der Bolzenachse stufenartige Änderungen einer Biegesteifigkeit des Planetenradbolzens, die auch Steifigkeitssprünge genannt werden. Der Planetenradbolzen ist derart ausgebildet, dass dadurch eine Reduzierung des Betriebsgeräuschs eines Planetengetriebes, dass über einen solchen Planetenradträger verfügt, reduziert ist.

Der Erfindung liegt unter anderem die überraschende Erkenntnis zugrunde, dass durch einen diskret veränderlichen Querschnitt entlang der Bolzenachse lokal eine reduzierte Biegesteifigkeit bezogen auf eine Lastbetriebsbiegeachse einstellbar ist. Die Lastbetriebsbiegeachse ergibt sich aus einer Beanspruchungsrichtung, die sich im bestimmungsgemäßen Betrieb des Planetenradträgers über eine Auslegungsbetriebsspanne ergibt. Die Auslegungsbetriebsspanne wird unter anderem durch eine vorliegende Drehzahl des Planetenradträgers und ein vom Planetenradträger insgesamt aufgenommenes Drehmoment bestimmt. Der diskret veränderliche Querschnitt erlaubt es, zwischen einem Planetenrad und einem Hohlrad bzw. einem Sonnenrad eines Planetengetriebes eine relative Schrägstellung der jeweiligen Verzahnungen zu reduzieren. Dies wiederum führt zu einer Reduzierung des auftretenden Betriebsgeräuschs. Diese Wirkung wird überraschenderweise über eine breite Auslegungsbetriebsspanne erzielt. Planetenradbolzen mit diskret veränderlichen Querschnitten sind einfach konstruierbar und auslegbar. Darüber hinaus können diskret veränderliche Querschnitte auch beispielsweise durch einfaches lokales spanendes Bearbeiten schnell und wirtschaftlich hergestellt werden.

In einer Ausführungsform des beanspruchten Planetenradträgers ist die erste Planetenradträger-Komponente mittels eines additiven Fertigungsverfahrens hergestellt. Geeignete additive Fertigungsverfahren, auch Additive Manufacturing genannt, können beispielsweise Selektives Laser-Sintern (SLS), Laser-Strahlschmelzen (LBM), Elektronen-Strahlschmelzen (EBM, EBAM), Fused-Layer-Modelling (FLM), Laser Metall Fusion (LMF), Fused Deposition Modeling (FDM), Digital Light Processing (DLP), Direct Metal Printing (DMP), Direct Metal Tooling (DMT), Stereolithographie, Pulverbettbasiertem Schmelzen (DMLS), Direct Energy Depositon (DED), selektives Laserschmelzen (SLM), Atomic Diffsion Additive Manufacturing (ADAM), Multi-Jet-Modelling, Poly-Jet Modeling (PJM), Film Transfer Imaging Modeling (FTI), Single-Pass-Jetting (SPJ), Metal Injection Molding (MIM), (Nano) 3D-Druck, Fused Filament Fabrication (FFF) Magneto Jetting, Material Jetting oder Binder Jetting sein. Ein additives Fertigungsverfahren erlaubt es, jegliche Geometrie in einfacher Weise herzustellen. Dadurch ist der beanspruchte Planetenradträger, insbesondere die erste Planetenradträger-Komponente, in wirtschaftlicher Weise einstückig herstellbar. Durch die derart erzielbare integrale Bauweise von Planetenradträger-Komponente und Planetenradbolzen wird die Anzahl an Schnittstellen zwischen Komponenten reduziert, was wiederum zu einer weiteren Reduzierung des auftretenden Betriebsgeräuschs führt.

Darüber hinaus kann beim beanspruchten Planetenradbolzen der diskret veränderliche Querschnitt durch eine durchgehende Ausnehmung am Planetenradbolzen ausgebildet sein. Die durchgehende Ausnehmung kann dabei im Wesentlichen senkrecht zur Bolzenachse ausgerichtet sein und so einen fensterartigen Durchbruch bilden. Im Bereich der durchgehenden Ausnehmung bildet in Radialrichtung deren Rand einen tragenden Querschnitt des Planetenradbolzens. Durch Wahl einer entsprechenden Ausrichtung der durchgehenden Ausnehmung können im entsprechenden Bolzenabschnitt Biegeachsen mit maximaler und minimaler Biegesteifigkeit festgelegt werden. Die durchgehende Ausnehmung am Planetenradbolzen ermöglicht eine konstruktiv einfache Festlegung eines Verformungsverhaltens des Planetenradbolzens, was eine einfache Anpassung der beanspruchten Lösung an eine Vielzahl von Anwendungsfällen erlaubt. Ferner erlaubt eine durchgehende Ausnehmung im Planetenradbolzen bei einer Biegebeanspruchung eine Wirkungsweise analog einem Querlenker. Dadurch wird eine Reduzierung des Betriebsgeräuschs in besonderem Maß erzielt.

In einer weiteren Ausführungsform kann der Planetenradbolzen eine richtungsabhängige Biegesteifigkeit aufweisen. Die Richtungsabhängigkeit ist dabei auf eine Lastrichtung bezogen, auf der der Planetenradbolzen auf Biegung beansprucht wird. Der Planetenradbolzen kann dabei bezogen auf die Hauptdrehachse des Planetenträgers in eine Radialrichtung, eine Tangentialrichtung, oder eine Kombination hieraus, auf Biegung beansprucht werden. Dementsprechend bestimmt die richtungsabhängige Biegesteifigkeit des Planetenradbolzens dessen Verformungsverhalten. Die Biegebeanspruchung kann dementsprechend durch eine Tangentialkraft, einer Radialkraft und/oder einer daraus zusammengesetzten Gesamtlast erfolgen. Infolge der richtungsabhängigen Biegesteifigkeit kann eine Verformungsrichtung des Planetenradbolzen von einer Richtung der Gesamtlast abweichen. Dementsprechend kann durch Wahl einer geeigneten Form des Planetenradbolzens ein Verformungsverhalten des Planetenradbolzens erzielt werden, das ein erhöhtes Maß an Geräuschminderung bietet. Darüber hinaus kann so bei einer Gleitlagerung eine übermäßige Belastung eines Schmierfilms vermieden werden. Dadurch ist auch bei hohen mechanischen Belastungen des Planetenradträgers eine zuverlässige Gleitlagerschmierung erzielbar.

Alternativ oder ergänzend kann der diskret veränderliche Querschnitt am Planetenradbolzen auch durch als konzentrischer oder exzentrischer Wellenabsatz ausgebildet sein. Die Begriffe konzentrisch und exzentrisch sind dabei auf die Bolzenachse bezogen. Ein konzentrischer Wellenabsatz kann dabei, bezogen auf den sonstigen Planetenradbolzen, als Bolzenabschnitt mit erhöhtem oder reduziertem Außendurchmesser ausgebildet sei. Derartige konzentrische Wellenabsätze sind in puncto Biegesteifigkeit in einfacher Weise berechenbar. Ein exzentrischer Wellenabsatz ermöglicht es, durch eine Wahl der Exzentrizität eine richtungsabhängige Biegesteifigkeit, und damit ein richtungsabhängiges Verformungsverhalten am entsprechenden Bolzenabschnitt festzulegen.

Weiter alternativ oder ergänzend kann der konzentrische oder exzentrische Wellenabsatz auch eine Form aufweisen, die vom Querschnitt am sonstigen Planetenradbolzen abweicht. Beispielsweise kann ein Planetenradbolzen einen kreisförmigen Querschnitt aufweisen, der von einem Wellenabsatz mit einem ovalförmigen, polygonförmigen, oder Reuleaux-dreieckförmigen Querschnitt unterbrochen ist. Auch hierdurch besteht die Möglichkeit, das Verformungsverhalten des Planetenradbolzens in konstruktiv einfacher Form anzupassen. Insbesondere im Zusammenspiel mit einer additiven Fertigung der ersten Planetenradträger-Komponente kann so ein besonders hohes Maß an Anpassbarkeit bei hoher Wirtschaftlichkeit für die beanspruchte Lösung erzielt werden.

Ferner kann der Planetenradbolzen am beanspruchten Planetenradträger zu einem Winkelausgleich bei einer Tangentialverformung des Planetenradbolzens ausgebildet sein. Durch eine Tangentialverformung tritt an einem Bolzenabschnitt, an dem ein Planetenrad anbringbar ist, eine Winkelverformung, also eine Schrägstellung, bezogen auf die Bolzenachse ein. Dadurch kann zwischen einer Verzahnung eines Planetenrads und einer Verzahnung eines Hohlrads oder eines Sonnenrads ein Winkelversatz eintreten, der bei einem Eingriff zu einer erhöhten Geräuschentwicklung führt. Der diskret veränderliche Querschnitt kann dazu ausgebildet sein, infolge von Zahneingriffskräften den beschriebenen Winkelversatz auszugleichen und so die eintretende Geräuschentwicklung zu mindern. Dadurch werden die beschriebenen Vorteile der Erfindung in besonderem Ausmaß erzielt.

In einer weiteren Ausführungsform des skizzierten Planetenradträgers kann dieser über zumindest eine Schmierstoffausnehmung verfügen. Die Schmierstoffausnehmung kann als Schmierstoffreservoir und/oder als Schmierstoffleitung, beispielsweise als Ölkanal ausgebildet sein. Ferner kann sich die Schmierstoffausnehmung in den Planetenradbolzen erstrecken und beispielsweise ein Gleitlager am Planetenradbolzen mit Schmierstoff versorgen. Die Schmierstoffausnehmung kann im Planetenradbolzen dazu ausgebildet sein, das Verformungsverhalten des Planetenradbolzen zu beeinflussen. Durch eine Schmierstoffausnehmung zur Einstellung eines Verformungsverhaltens des Planetenradbolzens wird eine zusätzliche Funktionsintegration erzielt. In Kombination mit einer additiven Fertigung der ersten Planetenradträger-Komponente ist die Form der Schmierstoffausnehmung in einfacher Weise an die Anforderungen eines gewünschten Verformungsverhaltens anpassbar.

Darüber hinaus kann der Planetenradbolzen zumindest teilweise als Hohlwelle ausgebildet sein. Eine Hohlwelle bietet ein vorteilhaftes Verhältnis zwischen Gewicht und Steifigkeit. Dadurch kann die beanspruchte Lösung in gewichtsparender Weise hergestellt werden. Bei Herstellung des Planetenradträgers mittels eines additiven Fertigungsverfahrens wird so der zu härtende Materialanteil reduziert, was wiederum eine beschleunigte und kosteneffiziente Herstellung erlaubt.

Der beanspruchte Planetenradträger kann ferner aus einem metallischen Werkstoff hergestellt sein. Im Einzelnen kann dies ein Stahl, eine Stahllegierung, Maraging-Stahl, Aluminium, eine Nickelbasislegierung, eine Nickel-Superlegierung, eine Titanlegierung, oder eine Kobalt-Chrom-Legierung sein. Derartige Werkstoffe sind zuverlässig und präzise mittels additiver Fertigungsverfahren verarbeitbar und bieten ein hohes Maß an mechanischer Beanspruchbarkeit. Ferner sind derartige metallische Werkstoffe robust gegen Materialermüdung und bieten eine hohe Lebensdauer

Die zugrundeliegende Aufgabenstellung wird auch durch die erfindungsgemäße Planetenradträgeranordnung gelöst. Die Planetenradträgeranordnung umfasst eine Mehrzahl an Planetenrädern, die jeweils drehbar an einem Planetenradträger angeordnet sind. Der Planetenradträger umfasst dabei die erste Planetenradträger-Komponente und die zweite Planetenradträger-Komponente, die als Aufsteckwange ausgebildet ist. Die erste und zweite Planetenradträger-Komponente sind montiert und dazu im Bereich eines freien Endes des Planetenradbolzens mit der zweiten Planetenradträger-Komponente beispielsweis verpresst, verschweißt oder verschraubt. Die Planetenradträgeranordnung umfasst auch einen Planetenradträger, der erfindungsgemäß nach einer der oben skizzierten Ausführungsformen ausgebildet ist.

In einer Ausführungsform der beanspruchten Planetenradträgeranordnung kann zumindest eines der Planetenräder an seiner Verzahnung einen Lastkorrekturwinkel aufweisen. Die Verzahnung ist dabei gegenüber einer korrespondierenden Ausrichtung einer Verzahnung eines Hohlrads oder eines Sonnenrads um den Lastkorrekturwinkel geneigt angeordnet. Bei Vorliegen einer Betriebslast ergeben sich an der Verzahnung des Planetenrades Verformungen, durch die dessen Verzahnung mit der Verzahnung des Hohlrads bzw. Sonnenrads korrespondiert. Der Lastkorrekturwinkel beträgt dabei bis zu 3°, insbesondere bis zu 3'. Infolge der Form des Planetenradträgers kommt die beanspruchte Planetenradträgeranordnung mit einem reduzierten Lastkorrekturwinkel aus. Insbesondere wird so eine vergrößerte Auslegungsbetriebsspanne erzielt, in der eine reduzierte Geräuschentwicklung auftritt.

Gleichermaßen wird die skizzierte Aufgabenstellung durch das erfindungsgemäße Planetengetriebe gelöst. Das Planetengetriebe umfasst ein Hohlrad, in dem eine Planetenradträgeranordnung angeordnet ist. Die Planetenradträgeranordnung weist einen Planetenradträger auf, an dem eine Mehrzahl an Planetenrädern drehbar angebracht ist. In der Planetenradträgeranordnung ist wiederum eine Sonnenwelle angeordnet, an der ein Sonnenrad angebracht ist. Über die Planetenräder der Planetenradträgeranordnung wirken das Hohlrad und das Sonnenrad bzw. die Sonnenwelle als Planetengetriebe zusammen. Erfindungsgemäß ist die Planetenradträgeranordnung gemäß einer der oben beschriebenen Ausführungsformen ausgebildet. Die beschriebenen technischen Vorteile des skizzierten Planetenradträgers und der entsprechenden Planetenradträgeranordnung werden so in besonderem Ausmaß genutzt und so ein Planetengetriebe bereitgestellt, das in Betrieb eine reduzierte Geräuschentwicklung aufweist. Darüber hinaus wird auch die mechanische Beanspruchung der Verzahnungen im Betrieb so verringert, was eine erhöhte Lebensdauer der Verzahnungen gewährleistet.

Die zugrundeliegende Aufgabe wird auch durch die erfindungsgemäße Windkraftanlage gelöst. Die Windkraftanlage umfasst eine Gondel, an der drehbar ein Rotor angeordnet ist. Der Rotor ist über eine Rotorwelle drehmomentübertragend mit einem Getriebe verbunden, das wiederum drehmomentübertragend mit einem Generator verbunden ist. Die Rotorwelle, das Getriebe und der Generator bilden zusammen einen Antriebsstrang. Erfindungsgemäß ist das Getriebe, das in der Windkraftanlage angeordnet ist, gemäß einer der oben dargestellten Ausführungsformen ausgebildet. Windkraftanlagen werden witterungsbedingt in einer breiten Spanne an Windgeschwindigkeiten betrieben. Eine Auslegung eines Getriebes auf einen einzigen Betriebspunkt ist deshalb nur bedingt zweckmäßig. Das erfindungsgemäße Planetengetriebe bietet eine reduzierte Geräuschentwicklung über eine weite Spanne an möglichen Windgeschwindigkeiten, und damit unterschiedlichen Drehzahlen und Drehmomenten im Getriebe.

Die Industrie-Applikation weist eine Antriebseinheit auf, die beispielsweise als Elektromotor, Verbrennungsmotor oder Hydraulikmotor ausgebildet sein kann, und über die eine Antriebsleistung zur Verfügung gestellt wird. Die Antriebseinheit ist drehmomentübertragend mit einem Getriebe verbunden, das wiederum drehmomentübertragend mit einer Abtriebseinheit verbunden ist. Die Abtriebseinheit kann dabei als mechanische Anwendung ausgebildet sein. Die mechanische Anwendung kann beispielweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung Müllpresse oder Schrottpresse ausgebildet sein.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleichen technischen Bedeutungen haben. Es zeigen im Einzelnen:
- FIG 1: einen schematischen Aufbau einer ersten Ausführungsform des beanspruchten Planentenradträgers im Längsschnitt;
- FIG 2: einen Planetenradbolzen gemäß FIG 1 im Querschnitt;
- FIG 3: einen schematischen Aufbau einer zweiten Ausführungsform des beanspruchten Planentenradträgers im Längsschnitt;
- FIG 4: einen Planetenradbolzen gemäß FIG 3 im Querschnitt;
- FIG 5: eine schematische Darstellung eines unbelasteten Zustands einer Ausführungsform der beanspruchten Planetenradträgeranordnung;
- FIG 6: eine schematische Darstellung eines belasteten Zustands der Ausführungsform nach FIG 5;
- FIG 7: eine schematische Seitenansicht einer Ausführungsform eines Planetenrads einer Ausführungsform der beanspruchten Planetenradträgeranordnung;
- FIG 8: eine schematische Seitenansicht einer weiteren Ausführungsform eines Planetenrads einer Ausführungsform der beanspruchten Planetenradträgeranordnung;
- FIG 9: einen schematischen Aufbau einer Ausführungsform der beanspruchten Windkraftanlage;
- FIG 10: einen schematischen Aufbau einer Ausführungsform der beanspruchten Industrie-Applikation.

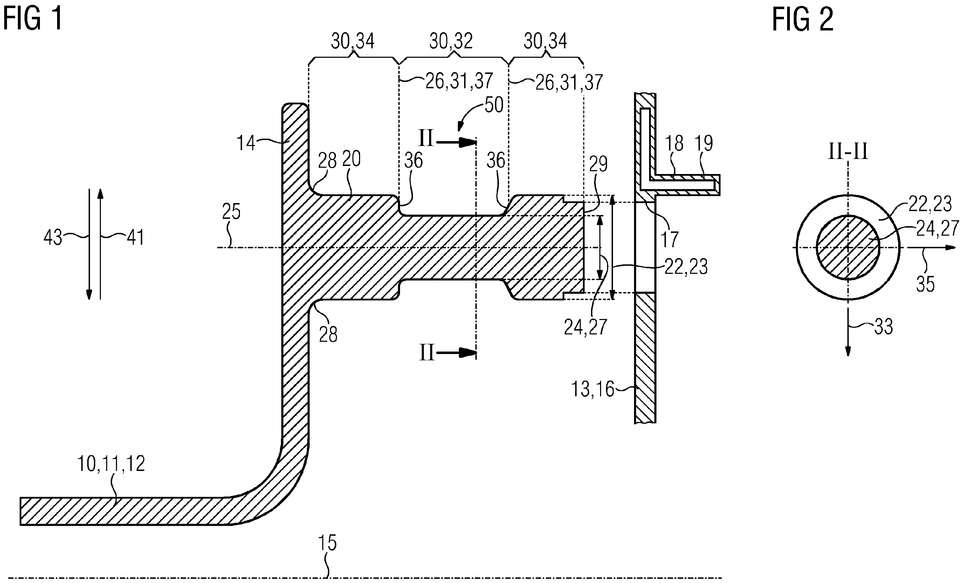

FIG 1 zeigt schematisch eine erste Ausführungsform des beanspruchten Planetenradträger 10 im Längsschnitt. Der Planetenradträger 10 umfasst eine erste Planetenradträger-Komponente 11, die eine Nabe 12 aufweist, die in eine Wange 14 übergeht. Ferner weist der Planetenradträger 10 eine zweite Planetenradträger-Komponente 13 auf, die als Aufsteckwange 16 ausgebildet ist. Die zweite Planetenradträger-Komponente 13 ist im montierten Zustand an einen Bolzenauge 17 mit einem Planetenradbolzen 20 der ersten Planetenradträger-Komponente 11 verbunden. Am Bolzenauge 17 und/oder am Planetenradbolzen 20 kann dazu eine Rändelung ausgebildet sein. Die zweite Planetenradträger-Komponente 13 verfügt auch über einen Lagersitz 18, der im Wesentlichen L-förmig von der Aufsteckwange 16 absteht. Der Lagersitz 18 ist von einer Bolzenachse 25 aus betrachtet radial außen angeordnet. Dadurch ist ein nicht näher gezeigtes Lager mit einem entsprechend hohen Durchmesser an der zweiten Planetenradträger-Komponente 13 anbringbar, um so den Planetenradträger 10 beidseitig zu lagern. Je weiter der Lagersitz 18 radial außen ausgebildet ist, umso höher ist der Durchmesser des dort einsetzbaren Lagers und umso stärker wird der Planetenträger 10 gegen Kippen gestützt. Wenn die zweite Planetenradträger-Komponente 13 durch ein additives Fertigungsverfahren hergestellt ist, kann diese zumindest in einem Bereich des Lagersitzes 18 einen Hohlraum 19 aufweisen, der wiederum eine Gewichtsersparnis bietet.

An die Wange 14 der ersten Planetenrad-Komponente 11 ist der Planetenradbolzen 20 angeformt, der sich entlang einer Bolzenachse 25 erstreckt. Die Bolzenachse 25 verläuft im Wesentlichen parallel zu einer Hauptdrehachse 15 des Planetenradträgers 10. Die erste Planetenradträger-Komponente 11 ist mittels eines additiven Fertigungsverfahrens hergestellt, so dass der Planetenradbolzen 20 einstückig mit der Wange 14 und der Nabe 12 ausgebildet ist. Zwischen der Wange 14 und dem Planetenradbolzen 20 ist ein verrundeter Übergang 28 ausgebildet, an den sich ein erster Bolzenabschnitt 30 anschließt. Der Bolzenabschnitt 30 am Übergang 28 weist einen im Wesentlichen kreisförmigen ersten Querschnitt 22 auf, der eine erste Biegesteifigkeit 23 aufweist. Daran schließt sich ein weiterer Bolzenabschnitt 30 an, der einen im Wesentlichen kreisförmigen zweiten Querschnitt 24 aufweist. Der zweite Querschnitt 24 hat einen geringeren Außendurchmesser als der erste Querschnitt 22 und weist infolgedessen eine zweite Biegesteifigkeit 27 auf, die geringer ist als die erste Biegesteifigkeit 23. Daran schließt sich im Bereich eines freien Endes 29 des Planetenradbolzen 20 ein Bolzenabschnitt 30 an, der einen ersten Querschnitt 22 wie der Bolzenabschnitt 30 aufweist, der sich an den Übergang 28 anschließt. Der Bolzenabschnitt 30 am freien Ende 29 weist dementsprechend auch eine korrespondierende erste Biegesteifigkeit 23 auf. Entlang des Planetenradbolzens 20 liegt somit ein weicher Bolzenabschnitt 32 zwischen zwei steifen Bolzenabschnitten 34. Zwischen dem weichen Bolzenabschnitt 32 und den steifen Bolzenabschnitten 34 liegt jeweils ein Wellenabsatz 36 vor, der im Wesentlichen eine Stufenform 31 aufweist. Durch den Wellenabsatz 36 ist somit ein diskreter, also im Wesentlichen stufenförmiger, Übergang vom ersten Querschnitt 22 zum zweiten Querschnitt 24 bzw., umgekehrt ausgebildet. Eine derartige Querschnittsstufe 26 geht auch mit einem entsprechenden Biegesteifigkeitssprung 37 einher. Der Wellenabsatz 36 ist konzentrisch ausgebildet, so dass die zweite Biegesteifigkeit im Wesentlichen richtungsunabhängig ist.

Der Planetenradbolzen 20, der in FIG 2 im Querschnitt in der Schnittebene II-II abgebildet ist, ist dazu ausgebildet, daran ein in FIG 1 nicht näher dargestelltes Planetenrad 50 drehbar anzubringen. Im Betrieb des Planetenradträgers 10 sind über das Planetenrad 50 eine Radialkraft 33 und/oder eine Tangentialkraft 35 auf den Planetenradbolzen 20 hervorrufbar. Zum besseren Verständnis ist in FIG 1 eine radial innere Richtung durch den Pfeil 43 dargestellt, eine radial äußere Richtung durch den Pfeil 41. Entlang des Planetenradbolzen 20 wird in den einzelnen Bolzenabschnitten 30 infolge der unterschiedlichen ersten und zweiten Biegesteifigkeiten 23, 27 unterschiedliche Verformungen hervorgerufen. Da der Planetenradträger 20 mittels eines additiven Fertigungsverfahrens hergestellt ist, sind die Querschnitte 22, 24 in den einzelnen Bolzenabschnitten 30 in einfacher Weise konstruktiv anpassbar, so dass bei einer entsprechenden Radialkraft 33 und/oder Tangentialkraft 35 am Planetenradbolzen 20 dessen Verformungsverhalten anpassbar ist. Durch eine entsprechende Wahl des ersten und zweiten Querschnitts 22, 24 an den einzelnen Bolzenabschnitten 30 ist so die Geräuschentwicklung beim Betrieb des Planetenradträgers 10 reduzierbar.

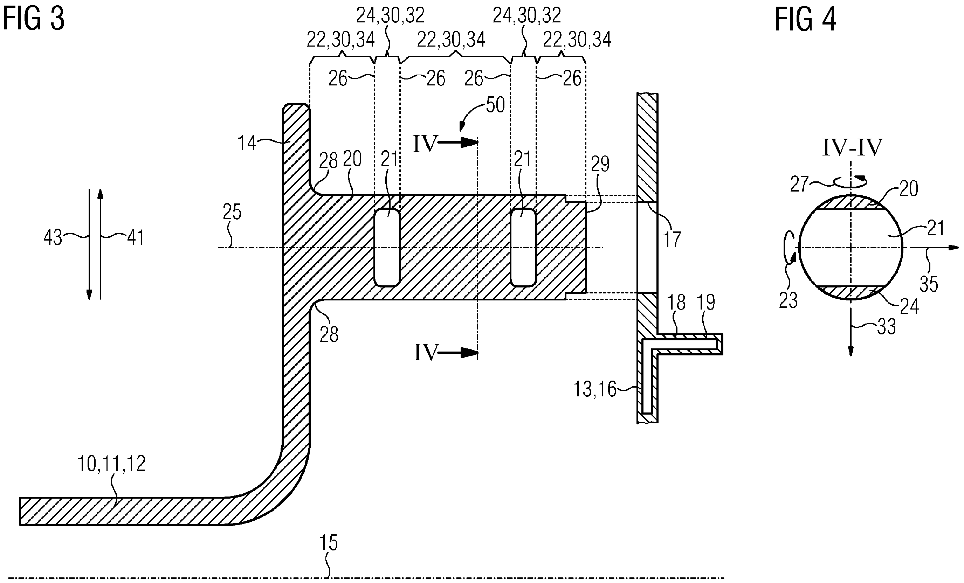

In FIG 3 ist eine zweite Ausführungsform des beanspruchten Planetenradträgers 10 abgebildet. Der Planetenradträger 10 umfasst eine erste Planetenradträger-Komponente 11, die eine Nabe 12 aufweist, die in eine Wange 14 übergeht. Ferner weist der Planetenradträger 10 eine zweite Planetenradträger-Komponente 13 auf, die als Aufsteckwange 16 ausgebildet ist. Die zweite Planetenradträger-Komponente 13 ist im montierten Zustand an einen Bolzenauge 17 mit einem Planetenradbolzen 20 der ersten Planetenradträger-Komponente 11 verbunden. Am Bolzenauge 17 kann dazu eine Rändelung ausgebildet sein. Die zweite Planetenradträger-Komponente 13 verfügt auch über einen Lagersitz 18, der im Wesentlichen L-förmig von der Aufsteckwange 16 absteht. Der Lagersitz 18 ist von einer Bolzenachse 25 aus betrachtet radial innen angeordnet. Dadurch ist ein nicht näher gezeigtes Lager mit einem entsprechend hohen Durchmesser an der zweiten Planetenradträger-Komponente 13 anbringbar, um so den Planetenradträger 10 beidseitig zu lagern. Wenn die zweite Planetenradträger-Komponente 13 durch ein additives Fertigungsverfahren hergestellt ist, kann diese zumindest in einem Bereich des Lagersitzes 18 einen Hohlraum 19 aufweisen, der wiederum eine Gewichtsersparnis bietet.

An die Wange 14 der ersten Planetenradträger-Komponente 11 schließt sich über einen verrundeten Übergang 28 der Planetenradbolzen 20 an. Der Planetenradbolzen 20 ist in FIG 4 in einem Querschnitt in der Schnittebene IV-IV nach FIG 3 dargestellt. Die erste Planetenradträger-Komponente 11 ist über ein additives Fertigungsverfahren hergestellt, so dass die Nabe 12, die Wange 14 und der Planetenradbolzen 20 einstückig ausgebildet sind. Der Planetenradträger 10 ist im Betrieb um eine Hauptdrehachse 15 drehbar. Im Wesentlichen parallel zur Hauptdrehachse 15 erstreckt sich eine Bolzenachse 25. Der Planetenradbolzen 20 weist eine Mehrzahl an Bolzenabschnitten 30 auf, an denen ein erster oder zweiter Querschnitt 22, 24 vorliegt. In einem Bolzenabschnitt 30, der sich an den Übergang 28 anschließt, weist der Planetenradbolzen 20 einen ersten Querschnitt 22 auf, in dem der Planetenradbolzen 20 im Wesentlichen massiv oder als Hohlwelle ausgebildet ist. Daran schließt sich ein Bolzenabschnitt 30 an, in dem durchgehende Ausnehmungen 21 im Planetenradbolzen 20 ausgebildet sind und entsprechend ein zweiter Querschnitt 24 vorliegt. Die durchgehenden Ausnehmungen 21 erstrecken sich im Wesentlichen quer zur Bolzenachse 25 und bilden im entsprechenden Bolzenabschnitt 30 eine Materialschwächung. An Bolzenabschnitten 30 mit einer durchgehenden Ausnehmung 21 liegt somit ein erster Querschnitt 22 vor. Ferner sind die Bolzenabschnitte 30 mit durchgehenden Ausnehmungen 21 sind jeweils weiche Bolzenabschnitte 32, die benachbart zu steifen Bolzenabschnitten 34 liegen. An den durchgehenden Ausnehmungen 21 weist der Planetenradbolzen 20 eine richtungsabhängige Biegesteifigkeit auf. Gegenüber einer einwirkenden Radialkraft 33 ist der Planetenradbolzen 20 an der durchgehenden Ausnehmung 21 weicher als gegenüber einer einwirkenden Tangentialkraft 35. Eine erste Biegesteifigkeit 23, die einer Verformung in eine radial äußere Richtung 41 oder eine radial innere Richtung 43 entgegenwirkt, ist dementsprechend geringer als eine zweite Biegesteifigkeit 27, die einer Verformung durch eine Tangentialkraft 35 entgegenwirkt. Durch ein Wählen einer Lage und Ausrichtung einer durchgehenden Ausnehmung 21 ist das Verformungsverhalten des Planetenradbolzens 21 gezielt einstellbar. Darüber hinaus erfolgt ein Übergang von einem steifen Bolzenabschnitt 34 zu einem weichen Bolzenabschnitt 32 bzw. umgekehrt stufenartig. Diese Querschnittsstufen 26 bilden diskrete, also nicht kontinuierliche Querschnittsänderungen dar. Eine solche Querschnittsstufe 26 erlaubt es, dass ein Bolzenabschnitt 30, der zwischen den durchgehenden Ausnehmungen 21 liegt, analog einem Querlenker quer zur Bolzenachse 25 auslenkbar ist. Bei einem in FIG 3 nicht näher dargestellten Planetenrad 50, das drehbar auf dem Planetenradbolzen 20 angeordnet ist, ist so dessen Ausrichtung im Wesentlichen beibehaltbar. Durchgehende Ausnehmungen 21 sind in puncto Form und Ausrichtung ein einfacher Weise konstruktiv anpassbar, so dass das Verformungsverhalten des Planetenradbolzens 20 an voraussichtlich auftretende Radialkräfte 33 und Tangentialkräfte 35 anpassbar ist. Ein Planetenrad 50 kann dadurch seine Ausrichtung auch unter einer Vielzahl an möglichen Kombinationen von einwirkenden Tangentialkräften 35 und Radialkräften 33 beibehalten, was zu einem geradlinigen und geräuscharmen Eingriff des Planetenrads 50 führt. Ein solcher geradliniger Eingriff führt auch zu einem reduzierten Verschleiß an einer Verzahnung des Planetenrads 50. Infolgedessen bietet ein Planetenradträger 10 gemäß FIG 3 ein hohes Maß an Geräuschdämpfung und eine erhöhte Lebensdauer.

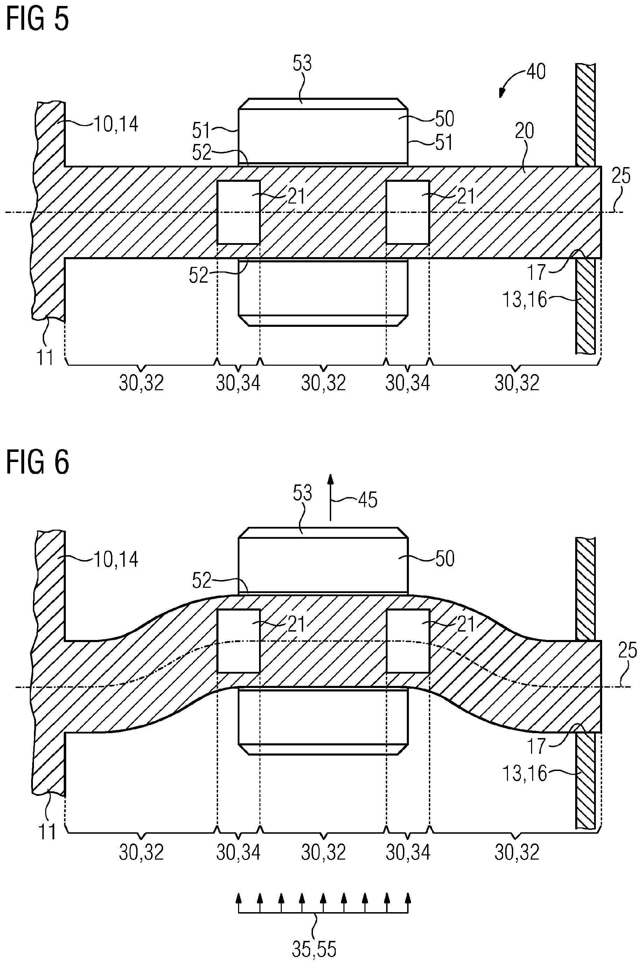

FIG 5 und FIG 6 zeigen einen Ausschnitt einer Ausführungsform einer beanspruchten Planetenradträgeranordnung 40 in einem unbelasteten Zustand und einem belasteten Zustand. Die Planetenradträgeranordnung 40 umfasst einen Planetenradträger 10, der eine erste und eine zweite Planetenradträger-Komponente 11, 13 umfasst, die miteinander verbunden sind. Im unbelasteten Zustand, in FIG 3 oben dargestellt, ist auf einem Planetenradbolzen 20, der einstückig mit einer Wange 14 der ersten Planetenradträger-Komponente 11 ausgebildet ist, ein Planetenrad 50 drehbar angeordnet. Dazu ist zwischen dem Planetenradbolzen 20 und dem Planetenrad 50 eine Gleitlagerbuchse 52 angeordnet. Im Bereich der Stirnseiten 51 des Planetenrads 50 sind im Planetenradbolzen 20 durchgehende Ausnehmungen 21 ausgebildet, durch die ein Verformungsverhalten eingestellt wird. Durch die durchgehenden Ausnehmungen 21 sind am Planetenradbolzen 20 Bolzenabschnitte 30 ausgebildet, zwischen denen eine diskrete Querschnittsänderung in Form von Querschnittsstufen 26 erfolgt. Im Bereich der durchgehenden Ausnehmungen 21 sind weiche Bolzenabschnitte 32 ausgebildet, an die steife Bolzenabschnitte 34 angrenzen.

Im belasteten Zustand, der in FIG 6 abgebildet ist, wirkt auf den Planetenradbolzen 20 eine Tangentialkraft 35, die im Bereich des Planetenrads 50 als Streckenlast 55 wirkt. Die Tangentialkraft 35 wird durch eine Betriebsbeanspruchung des Planetenrads 50 hervorgerufen. Infolge der durchgehenden Ausnehmungen 21 zeigt der Planetenradbolzen 20 im Bereich zwischen diesen im Wesentlichen einen Tangentialversatz 45, durch den die Bolzenachse 25 am Planetenrad 50 im Wesentlichen parallel versetzt wird. Eine Verzahnung 53 des Planetenrads 50 ist somit in der Lage, beispielsweise mit einem nicht näher dargestellten Hohlrad, geradlinig zu kämmen. Infolgedessen ist ein eintretendes Betriebsgeräusch vermindert. Die weichen Bolzenabschnitte 32 sind derart ausgebildet, dass ein Tangentialversatz 45 wie in FIG 6 bei einer weiten Spanne an Tangentialkräften 35 eintritt.

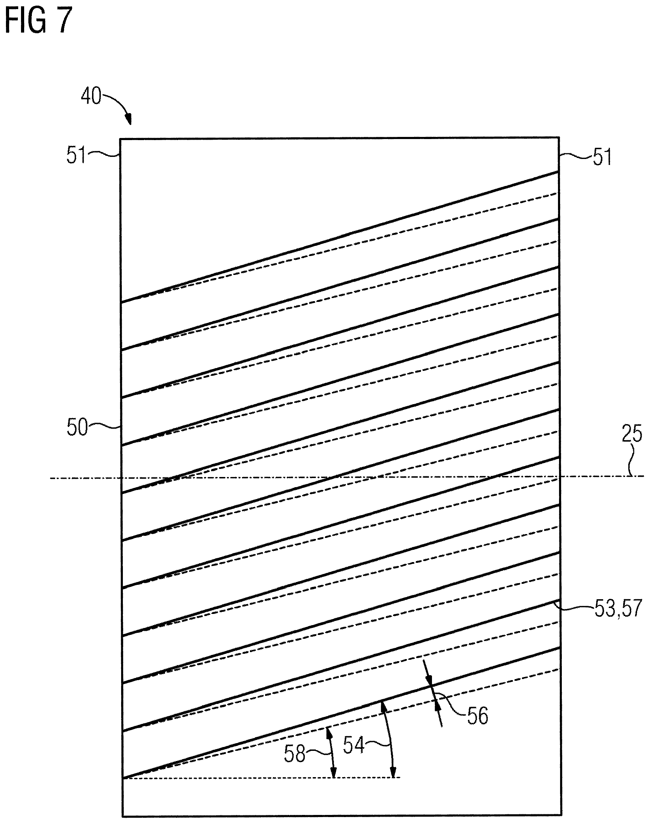

Eine schematische Seitenansicht einer Ausführungsform eines Planetenrads 50, das in einer Planetenradträgeranordnung 40 wie beispielsweise in FIG 1 bis FIG 6 einsetzbar ist, ist in FIG 7 abgebildet. Das Planetenrad 50 ist im montierten Zustand auf einem Planetenbolzen 20 um eine Bolzenachse 25 drehbar. Das Planetenrad 50 weist als Verzahnung 53 eine Schrägverzahnung 57 auf, die von Stirnseite 51 zu Stirnseite 51 bezogen auf die Bolzenachse 25 einen Schrägungswinkel 54 aufweist. Der Schrägungswinkel 54 entspricht einer Summe aus einem Steigungswinkel 58 und einem Lastkorrekturwinkel 56. Unter einer Betriebslast wird die Verzahnung 53 derart verformt, dass der Lastkorrekturwinkel 56 kompensiert wird. Im Zusammenspiel mit einem Planetenradträger 10 wie in FIG 1 oder FIG 2 treten an der Verzahnung 53 unter Last reduzierte mechanische Beanspruchungen auf. Infolgedessen kommt das Planetenrad 50 mit einem geringeren Lastkorrekturwinkel 56 als entsprechende Planetenräder aus dem Stand der Technik. Insbesondere beträgt der Lastkorrekturwinkel 56 bis zu 3°, insbesondere bis zu 3'. Demensprechend werden an der Verzahnung 53 die auftretenden Verformungen im Betrieb reduziert, was zu einer erhöhten Lebensdauer des Planetenrads 50 führt. Des Weiteren wird so eine verringerte Geräuschentwicklung beim Eingriff in ein Hohlrad oder ein Sonnenrad erzielt.

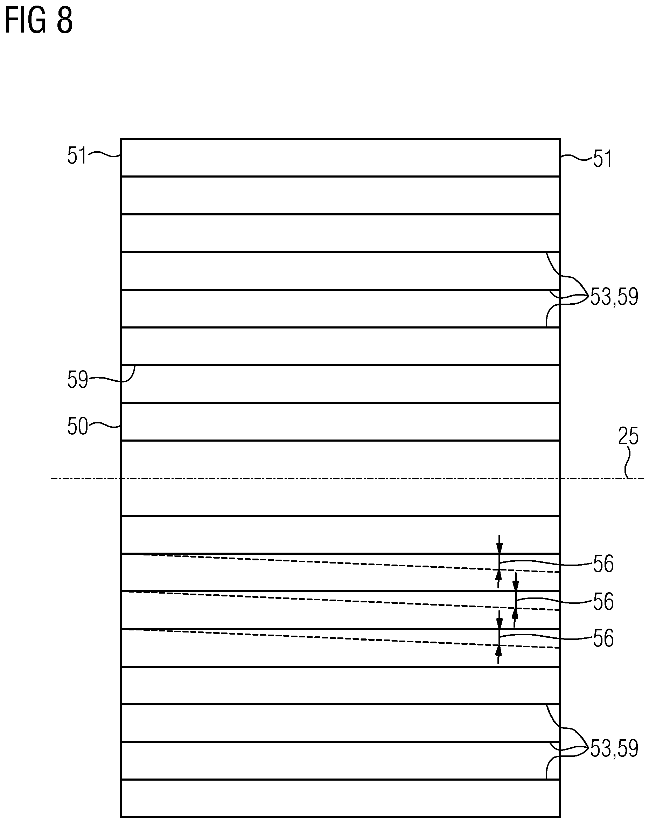

Eine schematische Seitenansicht einer weiteren Ausführungsform eines Planetenrads 50, das in einer Planetenradträgeranordnung 40 wie beispielsweise in FIG 1 bis FIG 6 einsetzbar ist, ist in FIG 8 abgebildet. Das Planetenrad 50 ist im montierten Zustand auf einem Planetenbolzen 20 um eine Bolzenachse 25 drehbar. Das Planetenrad 50 weist zwischen den Stirnseiten 51 als Verzahnung 53 eine Geradverzahnung 59 auf, die mit einem Lastkorrekturwinkel 56 beaufschlagt ist. Unter einer Betriebslast wird die Verzahnung 53 derart verformt, dass der Lastkorrekturwinkel 56 kompensiert wird. Im Zusammenspiel mit einem Planetenradträger 10 wie in FIG 1 oder FIG 2 treten an der Verzahnung 53 unter Last reduzierte mechanische Beanspruchungen auf. Infolgedessen kommt das Planetenrad 50 mit einem geringeren Lastkorrekturwinkel 56 als entsprechende Planetenräder aus dem Stand der Technik. Insbesondere beträgt der Lastkorrekturwinkel 56 bis zu 3°, insbesondere bis zu 3'. Demensprechend werden an der Verzahnung 53 die auftretenden Verformungen im Betrieb reduziert, was zu einer erhöhten Lebensdauer des Planetenrads 50 führt. Des Weiteren wird so eine verringerte Geräuschentwicklung beim Eingriff in ein Hohlrad oder ein Sonnenrad erzielt.

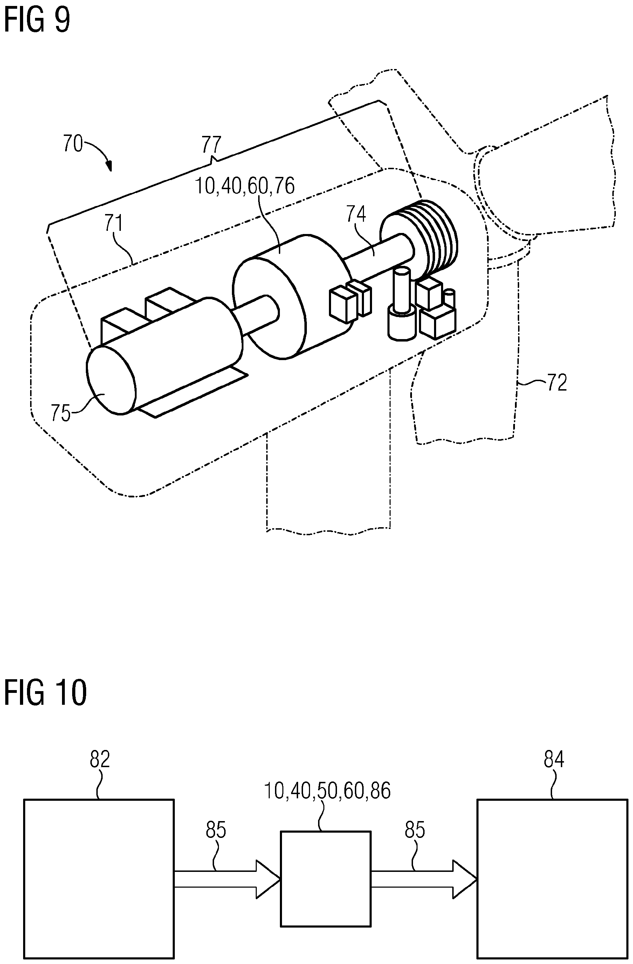

In FIG 9 ist schematisch der Aufbau einer Ausführungsform einer beanspruchten Windkraftanlage 70 dargestellt. Die Windkraftanlage 70 weist eine Gondel 71 auf, an der ein Rotor 72 drehbar angebracht ist. Der Rotor 72 ist drehmomentübertragend mit einer Rotorwelle 74 verbunden, die mit einem Getriebe 76 gekoppelt ist. Das Getriebe 76 wiederum ist drehmomentübertragend mit einem Generator 75 gekoppelt. Der Generator 75 und das Getriebe 76 gehören zu einem Antriebsstrang 77 der Windkraftanlage 70. Das Getriebe 76 ist als Planetengetriebe 60 ausgebildet, durch das eine Drehzahl der Rotorwelle 74 zu einer Generatoreingangsdrehzahl erhöht wird. Das Planetengetriebe 60 weist eine Planetenradträgeranordnung 40 gemäß einer der oben beschriebenen Ausführungsformen auf und ist dazu mit einem entsprechenden Planetenradträger 10 versehen. Durch die Verwendung eines solchen Planetenradträger 10 wird eine reduzierte Geräuschentwicklung im Betrieb der Windkraftanlage 70 erzielt. Ferner wird der Wartungsaufwand an der Windkraftanlage 70 reduziert, da durch den beschriebenen Planetenradträger 10 an den zugeordneten Planetenrädern 50 eine erhöhte Lebensdauer erreicht wird. Dies erlaubt insgesamt einen besonders wirtschaftlichen Betrieb der Windkraftanlage.

Ferner zeigt FIG 10 eine schematische Darstellung einer Industrie-Applikation 80, die eine Antriebseinheit 82 und eine Abtriebseinheit 84 umfasst. Durch die Antriebseinheit 82 wird eine Antriebsleistung 85 zur Verfügung gestellt und einem Getriebe 86 zugeführt. Dazu ist die Abtriebseinheit 82 beispielsweise als Elektromotor, Verbrennungsmotor oder Hydraulikmotor ausgebildet. Die Antriebsleistung 85 wird in puncto Drehzahl und Drehmoment gewandelter Form an die Abtriebseinheit 84 weitergeleitet. Die Abtriebseinheit 84 ist als mechanische Anwendung ausgebildet, beispielsweise als Horizontalmühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Senkvorrichtung Müllpresse oder Schrottpresse. Das Getriebe 86 ist als Planetengetriebe 60 ausgebildet und verfügt über eine Planetenradträgeranordnung 40 gemäß einer der oben beschriebenen Ausführungsformen. Die Planetenradträgeranordnung 40 ist mit einem Planetenradträger 10 nach einer der beschriebenen Ausführungsformen versehen und ist mit entsprechenden Planetenrädern 50, wie oben skizziert, ausgestattet. Durch Einsatz einer solchen Planetenradträgeranordnung 40 wird für die Industrie-Applikation 80 eine gesteigerte Laufruhe über einen breiteren Drehmomentbereich und eine erhöhte Lebensdauer erzielt.

## Patentansprüche

1. Planetenradträger (10), umfassend eine erste Planetenradträger-Komponente (11) mit einer Wange (14) und einem Planetenradbolzen (20), wobei die Planetenradbolzen (20) mit der Wange (14) einstückig ausgebildet sind, **dadurch gekennzeichnet, dass** zumindest einer der Planetenradbolzen (20) zu einer Reduzierung eines Betriebsgeräuschs entlang einer Bolzenachse (25) einen diskret veränderlichen Querschnitt (22, 24) aufweist.

2. Planetenradträger (10) nach Anspruch 1, **dadurch gekennzeichnet, dass** die erste Planetenradträger-Komponente (11) mittels eines additiven Fertigungsverfahrens hergestellt ist.

3. Planetenradträger (10) nach Anspruch 1 oder 2, **dadurch gekennzeichnet, dass** der diskret veränderliche Querschnitt (22, 24) durch zumindest eine durchgehende Ausnehmung (21) ausgebildet ist.

4. Planetenradträger (10) nach einem der Ansprüche 1 bis 3, **dadurch gekennzeichnet, dass** der Planetenradbolzen (20) eine richtungsabhängige Biegesteifigkeit (23, 27) aufweist.

5. Planetenradträger (10) nach einem der Ansprüche 1 bis 4, **dadurch gekennzeichnet, dass** der diskret veränderliche Querschnitt (22, 24) als konzentrischer oder exzentrischer Wellenabsatz (36) ausgebildet ist.

6. Planetenradträger (10) nach Anspruch 5, **dadurch gekennzeichnet, dass** der konzentrische oder exzentrische Wellenabsatz (36) einen polygonförmigen, ovalförmigen oder Reuleaux-dreieckförmigen Querschnitt aufweist.

7. Planetenradträger (10) nach einem der Ansprüche 1 bis 6, **dadurch gekennzeichnet, dass** der diskret veränderliche Querschnitt (22, 24) zu einem Winkelausgleich einer Tangentialverformung des Planetenradbolzens (20) ausgebildet ist.

8. Planetenradträger (10) nach einem der Ansprüche 1 bis 7, **dadurch gekennzeichnet, dass** im Planetenradbolzen (20) zumindest eine Schmierstoffausnehmung () ausgebildet ist.

9. Planetenradträger (10) nach einem der Ansprüche 1 bis 8, **dadurch gekennzeichnet, dass** der Planetenradbolzen (20) zumindest teilweise als Hohlbolzen ausgebildet ist.

10. Planetenradträger (10) nach einem der Ansprüche 1 bis 9, **dadurch gekennzeichnet, dass** der Planetenradträger (10) aus einem metallischen Werkstoff hergestellt ist.

11. Planetenradträgeranordnung (40), umfassend einen Planetenradträger (10), an dem eine Mehrzahl an Planetenrädern (50) drehbar angeordnet ist, **dadurch gekennzeichnet, dass** der Planetenradträger (10) nach einem der Ansprüche 1 bis 10 ausgebildet ist.

12. Planetenradträgeranordnung (40) nach Anspruch 10, **dadurch gekennzeichnet, dass** zumindest eines der Planetenräder (50) an einer Verzahnung (53) einen Lastkorrekturwinkel (56) von bis zum 3° aufweist.

13. Planetengetriebe (60), umfassend ein Hohlrad, in dem eine Planetenradträgeranordnung (40) angeordnet ist, in der wiederum eine Sonnenwelle angeordnet ist, **dadurch gekennzeichnet, dass** die Planetenradträgeranordnung (40) nach einem der Ansprüche 11 oder 12 ausgebildet ist.

14. Windkraftanlage (70), umfassend einen Rotor (72), der drehmomentübertragend mit einem Getriebe (76) verbunden ist, das drehmomentübertragend mit einem Generator (75) verbunden ist, **dadurch gekennzeichnet, dass** das Getriebe (76) als Planetengetriebe (60) nach Anspruch 13 ausgebildet ist.

15. Industrie-Applikation (80), umfassend eine Antriebseinheit (82), die drehmomentübertragend mit einem Getriebe (86) verbunden ist, das drehmomentübertragend mit einer Abtriebseinheit (84) verbunden ist, **dadurch gekennzeichnet, dass** das Getriebe (86) als Planetengetriebe (60) nach Anspruch 13 ausgebildet ist.
